(19) Europäisches Patentamt
European Patent Office
Office européen des brevets

(11) EP 1 530 900 B1

(12) EUROPEAN PATENT SPECIFICATION

(45) Date of publication and mention
of the grant of the patent:
**28.02.2007 Bulletin 2007/09**

(51) Int Cl.:
*A01N 25/14* (2006.01)        *A01N 43/84* (2006.01)

(21) Application number: **04026182.8**

(22) Date of filing: **04.11.2004**

(54) **Pesticidal particle**

Pestizidpartikel

Particule pesticide

(84) Designated Contracting States:
**DE ES FR GB IT**

(30) Priority: **12.11.2003 JP 2003382130**
**12.11.2003 JP 2003382131**

(43) Date of publication of application:
**18.05.2005 Bulletin 2005/20**

(73) Proprietor: **Sumitomo Chemical Company,**
**Limited**
**Tokyo 104-8260 (JP)**

(72) Inventors:
• **Watanabe, Atsushi**
**Toyonaka-shi**
**Osaka (JP)**

• **Inoue, Masao**
**Yokohama-shi**
**Kanagawa (JP)**

(74) Representative: **Henkel, Feiler & Hänzel**
**Patentanwälte**
**Maximiliansplatz 21**
**80333 München (DE)**

(56) References cited:
**EP-A- 0 529 975          GB-A- 1 227 997**
**US-A- 2 976 210          US-A1- 2003 064 896**
**US-A1- 2003 118 626          US-B1- 6 313 070**

**Description**

Technical Field

The present invention directs to a pesticidal particle obtainable by spray-drying.

Background Arts

Hitherto, various pesticidal formulations, wherein the release of the pesticidal active ingredients is controlled, have been suggested for the purpose of continuous pesticidal efficacy, decrease of phytotoxicity and so on. Examples of these known controlled release pesticidal formulations include a formulation of a microencapsulated pesticidal active ingredient (e.g. JP 59-20209A), a coated particle containing a pesticidal active ingredient (e.g. JP 60-226801A) and so on.
On the other hand, it is desired to have an aqueous suspension which can maintain a uniform dispersing state well after dispersing a pesticidal formulation in water.
US 2976210 A describes emulsions or suspensions of pesticides comprising oxidized polyethylene as sticking agent. The formulations are obtained by melting the wax and a fatty acid, adding an amine, then adding the mixture under stirring to hot water. To this dispersion a pesticidal spray powder dispersed in water is added.
US 2003/118626 A1 describes the stabilization of low to medium density suspensions of a pesticide by adding low density particles, like for instance micronized and oxidized polyethylene.
GB 1227997 A describes the preparation of wettable powders which will result in stable non-settling suspensions by spay-drying a slurry of active agent and sulphonate wetting agent.
US 6313070 B1 discloses a process for preparing aqueous suspension concentrates of the phthalimid herbicide flumioxazin by co-grinding an aqueous slurry of the herbicide, non-ionic and anionic surfactant, and a thixotroping additive.
US 2003/064896 A1 discloses water dispersible granules comprising flumioxazin, sulphonic acid and polycarboxylate surfactant, and a mineral carrier.
EP 529975 A describes the preparation of slow release herbicidal granules or particulates by mixing a melt of paraffin wax and a hydrocarbon polymer, like e.g. oxidized polyethylene, with the herbicide followed by the addition of a solid filler. The resulting mass is stirred further until room temperature is reached.
Namely, it has been desired to provide a controlled release pesticidal formulation that is good at maintaining a uniform dispersing state after dispersing in water.

Summary of the Invention

The present invention provides a pesticidal particle which is obtainable by spray-drying of a dispersion wherein a water-insoluble pesticidal active ingredient and oxidized polyethylene are dispersed in water, a pesticidal composition comprising the pesticidal particle, an anionic surfactant and a carrier, and a method for producing the pesticidal particle which comprises a) a step for preparing a dispersion wherein a water-insoluble pesticidal active ingredient and oxidized polyethylene are dispersed in water and b) a step for spray-drying the dispersion.

Detailed Description of the Invention

According to the present invention, a particle, which is obtainable by spray-drying of a dispersion wherein water-insoluble pesticidal active ingredient and oxidized polyethylene are dispersed in water, can control the release of the pesticidal active ingredient and the particle is excellent at maintaining a uniform dispersing state after it is dispersed in water.
The pesticidal particle of the present invention can be obtained by spray-drying of a dispersion wherein a water-insoluble pesticidal active ingredient and oxidized polyethylene are dispersed in water.
The water-insoluble pesticidal active ingredient used for the present invention can be solid or liquid at normal temperature (25°C), and preferable is one having 80°C or more of melting point in the view of the easiness of production of the pesticidal particle. The water-insoluble pesticidal active ingredient means a pesticidal active ingredient having a solubility of 1000mg/1000ml or less at 25°C. It is preferable to use a pesticidal active ingredient having a solubility of 100mg/1000ml or less at 25°C.
Examples of the pesticidal active ingredient include insecticidal active ingredients, fungicidal active ingredients, herbicidal active ingredients and plant growth regulating ingredients, and typical examples are as follows:

Insecticidal active ingredients: cypermethrin, deltamethrin, fenpropathrin, tralomethrin, acrinathrin, bifenthrin, resmethrin, tetramethrin, permethrin, isoprocarb, xylylcarb, XMC, carbaryl, carbofuran, fenoxycarb, alanicarb, fenobucarb, bendiocarb, tetrachlorvinphos, dimethylvinphos, phosalone, chlorpyrifos, chlorpyrifos-methyl, pyridaphenthion, quinalphos, methidathion, azinphos-ethyl, azinphos-methyl, salithion, cyanophos, EPN, cyanophenphos, diflubenzuron, chlorfluazuron, lufenuron, hexaflumuron, flufenoxuron, flucycloxuron, diafenthiuron, hexythiazox, novaluron, teflubenzuron, triflumuron, bensultap, fenoxycarb, fenazaquin, fenpyroximate, pyridaben, hydramethylnon, thiodicarb, chlorfenapyr, pymetrozine, pyrimidifen, tebufenozide, tebufenpyrad, triazamate, sulfluramid, milbemectin, pyridalyl and so on.

Fungicidal active ingredients: benomyl, carbendazim, thiphanate-methyl, diethofencarb, procymidone, iprodione, vinclozolin, diniconazole, tebuconazole, difenoconazole, cyproconazole, flusilazole, triadimefon, furametpyr, mepronil, flutolanil, tolclofos-methyl, pyrazophos, pyrimethanil, mepanipyrim, cyprodinil, fludioxonil, fenpiclonil, azoxystrobin, kresoxim-methyl, metominostrobin, chlorothalonil, manzeb, captan, folpet, probenazole, dimethomorph, famoxadone, oxolinic acid, fluazinam, ferimzone and so on.

Herbicidal active ingredients: fenoxaprop-P-ethyl, cyhalofop-butyl, bensulfuron-methyl, nicosulfuron, cyclosulfamuron, triflusulfuron-methyl, imazaquin, flumetsulam, atrazine, metribuzin, fluometuron, isoproturon, propanil, bromoxynil, ioxynil, bentazon, flumioxazin, fluthiacet-methyl, azafenidin, sulfentrazone, norflurazon, diflufenican, isoxaflutole, pendimethalin, trifluralin, mefenacet, mecoprop, fluroxypyr and so on.

Plant growth regulating ingredients: thidiazuron, inabenfide, paclobutrazol, uniconazole and so on.

The oxidized polyethylene used for the present invention is also called as oxidized polyethylene wax, and it is available in the market. In the present invention, preferable is the oxidized polyethylene having 10-30mg of acid value, which is an amount of potassium hydroxide required for neutralizing the free carboxylic acid contained in 1g of the oxidized polyethylene, and having 80·150°C of melting point. The melting point of the oxidized polyethylene means the temperature at which the oxidized polyethylene starts to melt.

In the present invention, the dispersion wherein the water-insoluble pesticidal active ingredient and the oxidized polyethylene are dispersed in water can be prepared, for example, by adding the water-insoluble pesticidal active ingredient pulverized finely (e.g. volume median diameter: approximately 1-7 $\mu$m) to an aqueous dispersion containing the oxidized polyethylene and stirring. The method for pulverizing the water-insoluble pesticidal active ingredient finely is, for example, dry-pulverizing methods such as hammer mill and jet mill and wet pulverizing methods such as beads mill.

The aqueous dispersion containing the oxidized polyethylene can be prepared by oxidizing a dispersion containing polyethylene with oxygen. It is also available in the market. Further, it can also be obtained by dispersing powders of the oxidized polyethylene in the market. In the last case, the oxidized polyethylene used for the present invention has generally 1 $\mu$m or less of average diameter (volume median diameter).

In the present invention, the weight ratio of the pesticidal active ingredient to the oxidized polyethylene is usually in the range of 1:99-95:5, preferably 10:90-80:20.

The dispersion containing the pesticidal active ingredient and the oxidized polyethylene may further contain a surfactant, auxiliary for pulverizing, thickner and so on.

Examples of the surfactant include nonionic surfactants, cationic surfactants, amphoteric surfactants and mixtures thereof. Typical nonionic surfactants are polyoxyethylene carboxylic ester, polyoxyethylene polyoxypropylene alkyl aryl ether, polyoxyethylene polyoxypropylene block copolymer, polyoxyethylene alkyl aryl ether, polyoxyethylene alkyl ether, polyoxyethylene polyoxypropylene tristyryl phenyl ether, polyoxyethylene styryl phenyl ether, polyoxyethylene tristyryl phenyl ether, polyoxyethylene fatty acid ester, fatty acid ester, polyvalent alcohol ester of fatty acid and polyoxyethylene polyvalent alcohol ester of fatty acid. The amount is usually 0.5-30 parts by weight per 100 parts by weight of the total amount of the water-insoluble pesticidal active ingredient and the oxidized polyethylene.

Examples of the auxiliary for pulverizing include amorphous silicon dioxide, diatomaceous earth, kaolin clay, agalmatolite clay, selicite, zeeklite, talc, terra alba, calcium carbonate and bentonite. The amount is usually 0.5-50 parts by weight per 100 parts by weight of the total amount of the water-insoluble pesticidal active ingredient and the oxidized polyethylene.

Examples of the thickner include polymer thickners such as polyvinyl alcohol, carboxymethylcellulose, dextrin, xanthan gum, guar gum, gum arabic, alginic acid, casein, gelatin, polyvinylpyrrolidone, carboxyvinyl polymers, acrylic polymers, starch derivatives and heteropolysaccharides, and inorganic thickners such as bentonite and hydrated silica. The amount is usually 1-10 parts by weight per 100 parts by weight of the total amount of the water-insoluble pesticidal active ingredient and the oxidized polyethylene.

The pesticidal particle of the present invention can be produced by spray-drying of the dispersion. In the present invention, the spray-drying means a technique spraying and vaporizing water that is a dispersing medium in the dispersion simultaneously to deposit a solid.

The spray-drying of the dispersion is usually carried out by spraying the dispersion into a dry air current heated to approximately 80 to 220°C. The sprayed dispersion is placed in a dry air current and the water is vaporized to form the pesticidal particle of the present invention.

Examples of the spray device for the production include rotary type, pressure nozzle type and two-fluid nozzle.

The particle diameter (volume median diameter) of the pesticidal particle are usually within the range of 5-30

$\mu$ m. These small size particles can be obtained by varying the spray condition of the dispersion at spraying. Namely, by increasing the spray pressure or by decreasing the speed of providing the spray liquid, the particle diameter can be made small. Further, by lowering the concentration of the solid components in the spray liquid or by lowering the viscosity of the spray liquid, the particle diameter can be made small. It is preferable to use two-fluid nozzle. Said particle diameter can be measured with Laser Diffraction method. For example, Laser Diffraction Particle Size Analyzer SALD-1100 (produced by Shimadzu Corporation) can be used.

The spray-drying condition can be suitably set according to the device used for the spray-drying. In the case that Spray-dryer SD-1 produced by EYELA is used together with a two-fluid nozzle, the condition is as followings: Flow rate of the transport liquid sample is 50-500ml/hour, spray pressure is 0.2-2.0kg/cm$^2$, flow rate of dried air is 0.4-1.0m$^3$/min, inlet temperature of the dried air is 100-200°C and outlet temperature of the dried air is 50-100°C.

The pesticidal particles of the present invention may agglomerate when it is manufactured by the above-mentioned method. In that case, the pesticidal particles of the present invention can be obtained by pulverizing the particles with a grinder and the like.

The pesticidal particles of the present invention can be suspended in water and then used by making an effective amount of the pesticidal active ingredient applied to soil or plants.

Further, it is possible to formulate by mixing the pesticidal particles of the present invention with an inert carrier such as solid carrier and liquid carrier, optionally surfactant and the other auxiliary for formulation to wettable powders, water dispersible granules, flowable and so on. When the pesticidal particles of the present invention are formulated, the formulation is used by conventional pesticidal application method according to the type of the formulation.

In the formulation containing the pesticidal particle, a pesticidal composition comprising the pesticidal particle, an anionic surfactant and a carrier, wherein the content of the anionic surfactant is 10% by weight or more, is excellent at the release control of the pesticidal active ingredient when diluted with water.

Examples of the anionic surfactant of the present invention include alkyl sulfate, polyoxyethylene alkyl ether sulfate, polyoxyethylene alkylphenyl ether sulfate, polyoxyethylene benzylphenyl ether sulfate, polyoxyethylene styrylphenyl ether sulfate, polyoxyethylene polyoxypropylene block polymer sulfate, paraffinsulfonate, alkanesulfonate, dialkyl sulfosuccinate, alkylbenzenesulfonate, naphthalenesulfonate, alkylnaphthalenesulfonate, dialkylnaphthalenesulfonate, condensate of alkylnaphthalenesulfonate with formalin, alkyl diphenyl ether disulfonate, ligninsulfonate, polyoxyethylene alkylphenyl ether sulfonate, polyoxyethylene alkyl ether sulfosuccinate half ester, fatty acid salt, N-methylfatty acid salcosinate, resin acid salt, polyoxyethylene alkyl ether phosphate, polyoxyethylene phenyl ether phosphate, polyoxyethylene dialkylphenyl ether phosphate, polyoxyethylene benzylphenyl ether phosphate, polyoxyethylene benzylphenyl phenyl ether phosphate, polyoxyethylene styrylphenyl ether phosphate, polyoxyethylene styrylphenyl phenyl ether phosphate, polyoxyethylene polyoxypropylene block polymer phosphate, phosphatidylcholine, phosphatidyl ethanolimine and alkyl phosphate.

Among them, one or more selected from the group of alkylnaphthalenesulfonates, ligninsulfonates and condensates of alkylnaphthalenesulfonate with formalin are preferably used in the view of the used amount of the anionic surfactant.

Examples of the solid carrier suitable for the pesticidal composition include clays such as pyrophyllite, hydrated kaolin, anhydrous kaolin, bentonite and selicite, calcium carbonate, diatomaceous earth, talc, silica, pumice, vermiculite, perlite, calcium silicate, sucrose, glucose, maltose, lactose, dextrin, starches, cellulose derivatives (cellulose, carboxymethylcellulose and so on), ammonium sulfate, sodium sulfate, ammonium chloride, potassium chloride, sodium carbonate and urea.

The pesticidal composition contains 10% by weight or more, usually 10-80% by weight, preferably 10-25% by weight of the anionic surfactant. In addition, the pesticidal composition usually contains a) 0.1-40% by weight of the pesticidal particle and c) 5-89.9% by weight of the solid carrier.

The pesticidal composition may further contain a binder, disintegrating agent and/or the other surfactant as well as the pesticidal particle, anionic surfactant and solid carrier.

Examples of the binder include gums such as locust bean gum, tragacanth gum, xanthan gum and gum arabic; alginic acid derivatives such as sodium alginate, ammonium alginate and propylene glycol ester of alginic acid; organic polymer compounds such as polyvinyl alcohol, polyvinylpyrrolidone, polyvinyl metacrylate, polyethylene oxide and polyacrylamide; and animal- or plant-originated water-soluble proteins such as the white of an egg, albumin, casein and gelatin. The amount is usually 0.1-20% by weight in the pesticidal composition.

Examples of the other surfactant include nonionic surfactant such as polyoxyethylene carboxylic ester, polyoxyethylene polyoxypropylene alkyl aryl ether, polyoxyethylene polyoxypropylene block copolymer, polyoxyethylene alkyl aryl ether, polyoxyethylene alkyl ether, polyoxyethylene polyoxypropylene tristyryl phenyl ether, polyoxyethylene styryl phenyl ether, polyoxyethylene tristyryl phenyl ether, polyoxyethylene fatty acid ester, fatty acid ester, polyvalent alcohol ester of fatty acid, polyoxyethylene polyvalent alcohol ester of fatty acid and polyoxyethylene alkylamine. The amount is usually 0.1-20% by weight in the pesticidal composition.

In the pesticidal composition, powders of the pesticidal composition are produced by mixing the controlled release pesticidal particle, anionic surfactant, solid carrier and optionally the other component with a mixer and the like, and pulverized with a grinder such as air mill, hammer mill, centrifugal pulverizer and so on, and granules are produced from the powders by forming with compression molding machine (e.g. roller compacter), piston granulator, tumbling granulator or fluidized bed granulator.

The pesticidal composition is usually used by diluted with water to make a designated concentration of the pesticidal active ingredient and applied to crops in the form of the obtained suspension.

Examples

Hereinafter, the present invention is explained by examples in more detail; however, the present invention is not restricted to these examples.

Production example 1

To a mixture of 40 parts by weight of Agrocer 06 (25% by weight of aqueous oxidized polyethylene (mp: 115°C, particle diameter: 0.19μ m, acid value: 16-19mg KOH/g) dispersion provided by Clariant) and 40 parts by weight of water, 20 parts by weight of flumioxazin (particle diameter: 3.3 $\mu$ m, pulverized by jet mill) were added and stirred to afford a dispersion. The dispersion was spray-dried under the below-mentioned condition and the obtained solid was grinded by a pulverizer (screen diameter: 1.5mm, revolution: 10000rpm, produced by Nihonseiki Seisakusho) to afford pesticidal particles of the present invention (particle diameter: 11.1 $\mu$ m).
Spray-dry condition
Spray-drier: Spray-dryer SD-1 produced by EYELA
Spray device: two-fluid nozzle having a spray nozzle of 0.51mm in diameter
Flow rate of the transport liquid sample: 200ml/hour
Pressure for spraying sample: 0.7kg/cm$^2$
Flow rate of dried air: 0.6m$^3$/min
Inlet temperature of the dried air: 115°C
Outlet temperature of the dried air : 65°C

Production example 2

By the same procedure as Production example 1, provided that 40 parts by weight of Agrocer 06 used in Production example 1, 50 parts by weight of water and 10 parts by weight of flumioxazin (average diameter: 3.3 $\mu$ m) were used, pesticidal particles of the present invention (average particle diameter: 9.1 $\mu$ m) were obtained.

Production example 3

By the same procedure as Production example 1, provided that 60 parts by weight of Agrocer 06 used in Production example 1, 25 parts by weight of water and 15 parts by weight of flumioxazin (average diameter: 3.3 $\mu$ m) are used, pesticidal particles of the present invention are obtained. Production example 4
By the same procedure as Production example 1, provided that 80 parts by weight of Agrocer 06 used in Production example 1 and 20 parts by weight of flumioxazin (average diameter: 3.3 $\mu$ m) were used, pesticidal particles of the present invention (average particle diameter: 15.9 $\mu$ m) were obtained.

Production example 5

By the same procedure as Production example 1, provided that 80 parts by weight of Agrocer 06 used in Production example 1, 10 parts by weight of water and 10 parts by weight of flumioxazin (average diameter: 3.3 $\mu$ m) were used, pesticidal particles of the present invention (average particle diameter 11.9 $\mu$m) were obtained.

Reference production example 1

To a mixture (containing 12.5% by weight of polyethylene) of 25 parts by weight of Hordamer PE03 (40% by weight of aqueous polyethylene (mp: 96°C, particle diameter: 0.17 $\mu$ m) dispersion provided by Clariant) and 55 parts by weight of water, 20 parts by weight of flumioxazin (average diameter: 3.3 $\mu$ m, pulverized by jet mill) were added and stirred to afford a dispersion. The dispersion was spray-dried under the same condition as Production example 1and pulverized to afford pesticidal particles for reference.

Reference production example 2

To a mixture (containing 12.5% by weight of polyethylene) of 50 parts by weight of Hordamer PE03 used in Reference production example 1 and 30 parts by weight of water, 20 parts by weight of flumioxazin (average diameter: 3.3 $\mu$ m, pulverized by jet mill) were added and stirred to afford a dispersion. The dispersion was spray-dried under the same condition as Production example land pulverized to afford pesticidal particles for reference.

Test example 1

Samples of the pesticidal particles were added to 50ml of hard water (342ppm, CIPAC standard water) and suspended to make the concentration of flumioxazin 500ppm.
On the other hand, 200ml of hard water (342ppm, CIPAC standard water) were charged into a 250ml-graduated cylinder with stopper and kept at 30°C. The suspension of the sample of the pesticidal particles obtained above was added, and then the cylinder was plugged and turned upside down 30 times for one minute.
After allowing it to stand at 30°C for 30 minutes, 25ml of the suspension were collected at the place of approximately 125ml graduation of the cylinder. The content of the flumioxazin in the collected suspension was measured by quantitative analysis using high-performance liquid chromatography and the suspension ratio was calculated by the following formula.

$$\text{Suspension ratio (\%)} = \{(\text{amount of the collected flumioxazin})/(\text{total amount of flumioxazin in the pesticidal particles used for the test})/10\} \times 100$$

The results are given in Table 1.

Table 1

|  | Suspension ratio (%) |
|---|---|
| Production example 1 | 78 |
| Production example 4 | 78 |
| Reference production example 1 | 49 |
| Reference production example 2 | 19 |

Test example 2

A designated amount of each of the pesticidal particles obtained in Production examples 1 and 4 was mixed with 1 liter of ion-exchanged water and stirred slowly at 25°C. After a designated period, 100ml of the sample were collected from the center of the beaker and filtered. Flumioxazin was extracted from the solid filtered out and the amount of flumioxazin in the solid was measured. From the results, the elution ratio of flumioxazin from the pesticidal particles of the present invention after a designated period was determined.
The results are given in Table 2.

Table 2

|  |  | Elution ratio (%) |
|---|---|---|
|  | Amount used for the test (mg) | After 6 hours |
| Production example 1 | 573 | 61 |
| Production example 4 | 795 | 41 |

Next, examples of the pesticidal composition of the present invention are described below.

Formulation example 1

Twenty parts by weight of flumioxazin (particle diameter: 3.3 $\mu$ m, pulverized by jet mill) were added to 80 parts by weight of Agrocer 06 (25% by weight of aqueous oxidized polyethylene (mp: 115°C, particle diameter: 0.19 $\mu$ m, acid value: 16-19mg KOH/g) dispersion provided by Clariant) and stirred to afford a dispersion. The dispersion was spray-dried under the same condition as Production example 1 and the obtained solid was grinded by a pulverizer (screen diameter: 1.5mm, revolution: 10000rpm, produced by Nihonseiki Seisakusho) to afford the controlled release pesticidal particles (particle diameter 14.2$\mu$m).

Twenty-two parts by weight of the pesticidal particles obtained above, 10 parts by weight of a condensate of sodium alkylnaphthalenesulfonate with formalin (commercial name: Morwet D-425, Crompton Corp.), 1.5 parts by weight of sodium alkylnaphthalenesulfonate (commercial name: Morwet EFW, Crompton Corp.) and 66.5 parts by weight of hydrated kaolin were pulverized and mixed in a mortar to afford a pesticidal composition of the present invention.

Formulation example 2

Twenty-two parts by weight of the pesticidal particles obtained in Formulation example 1, 10 parts by weight of sodium ligninsulfonate (commercial name: Reax 85A, Westvaco Corp.), 1.5 parts by weight of sodium alkylnaphthalenesulfonate (commercial name: Morwet EFW, Crompton Corp.) and 66.5 parts by weight of hydrated kaolin were pulverized and mixed in a mortar to afford a pesticidal composition of the present invention.

Formulation example 3

Twenty-two parts by weight of the pesticidal particles obtained in Formulation example 1, 10 parts by weight of Demol EP powder (specific polycarboxylic acid type polymer surfactant, Kao Corp.), 1.5 parts by weight of sodium alkylnaphthalenesulfonate (commercial name: Morwet EFW, Crompton Corp.) and 66.5 parts by weight of hydrated kaolin were pulverized and mixed in a mortar to afford a pesticidal composition of the present invention.

Formulation example 4

Twenty-two parts by weight of the pesticidal particles obtained in Formulation example 1, 20 parts by weight of a condensate of sodium alkylnaphthalenesulfonate with formalin (commercial name: Morwet D-425, Crompton Corp.), 1.5 parts by weight of sodium alkylnaphthalenesulfonate (commercial name: Morwet EFW, Crompton Corp.) and 56.5 parts by weight of hydrated kaolin are pulverized and mixed in a mortar to afford a pesticidal composition of the present invention.

Formulation example 5

Twenty-two parts by weight of the pesticidal particles obtained in Formulation example 1, 40 parts by weight of a condensate of sodium alkylnaphthalenesulfonate with formalin (commercial name: Morwet D-425, Crompton Corp.), 1.5 parts by weight of sodium alkylnaphthalenesulfonate (commercial name: Morwet EFW, Crompton Corp.) and 36.5 parts by weight of hydrated kaolin are pulverized and mixed in a mortar to afford a pesticidal composition of the present invention.

Formulation example 6

Twenty-two parts by weight of the pesticidal particles obtained in Formulation example 1, 70 parts by weight of a condensate of sodium alkylnaphthalenesulfonate with formalin (commercial name: Morwet D-425, Crompton Corp.), 1.5 parts by weight of sodium alkylnaphthalenesulfonate (commercial name: Morwet EFW, Crompton Corp.) and 6.5 parts by weight of hydrated kaolin are pulverized and mixed in a mortar to afford a pesticidal composition of the present invention.

Formulation example 7

4.4 parts by weight of the pesticidal particles obtained in Formulation example 1, 10 parts by weight of a condensate of sodium alkylnaphthalenesulfonate with formalin (commercial name: Morwet D-425, Crompton Corp.), 1.5 parts by weight of sodium alkylnaphthalenesulfonate (commercial name Morwet EFW, Crompton Corp.) and 84.1 parts by weight of hydrated kaolin are pulverized and mixed in a mortar to afford a pesticidal composition of the present invention.

Formulation example 8

0.88 part by weight of the pesticidal particles obtained in Formulation example 1, 10 parts by weight of a condensate of sodium alkylnaphthalenesulfonate with formalin (commercial name: Morwet D-425, Crompton Corp.), 1.5 parts by weight of sodium alkylnaphthalenesulfonate (commercial name: Morwet EFW, Crompton Corp.) and 87.62 parts by weight of hydrated kaolin are pulverized and mixed in a mortar to afford a pesticidal composition of the present invention.

Formulation example 9

Twenty-two parts by weight of the pesticidal particles obtained in Formulation example 1, 1.5 parts by weight of sodium alkylnaphthalenesulfonate (commercial name Morwet EFW, Crompton Corp.) and 76.5 parts by weight of hydrated kaolin were pulverized and mixed in a mortar to afford a pesticidal formulation.

Formulation example 10

Twenty-two parts by weight of the pesticidal particles obtained in Formulation example 1, 10 parts by weight of polyethylene glycol (commercial name : PEG 1000, Sanyo Chemical Industries), 1.5 parts by weight of sodium alkylnaphthalenesulfonate (commercial name: Morwet EFW, Crompton Corp.) and 66.5 parts by weight of hydrated kaolin were pulverized and mixed in a mortar to afford a pesticidal formulation.

Test example 3

Into 1000ml of ion-exchanged water, 3.58g of the pesticidal composition for the test were added and stirred with a magnetic stirrer for 3 hours at 25°C. Then, 100ml of this suspension were collected and filtrated to afford a solid. The amount of flumioxazin in the solid was measured by high-performance liquid chromatography. The amount of flumioxazin in the pesticidal composition for the test was calculated by using the measured value, and the elution ratio was determined.
The results are given in Table 3.

Table 3

|  | Elution ratio (%) |
|---|---|
| Formulation example 1 | 34.2 |
| Formulation example 2 | 34.7 |
| Formulation example 3 | 33.4 |
| Formulation example 9 | 58.0 |
| Formulation example 10 | 55.9 |

As shown in Table 3, the pesticidal compositions obtained in Formulation examples 1, 2 and 3 are effective for controlling the release of the pesticidal active ingredient. On the other hand, the pesticidal compositions obtained in Formulation examples 9 and 10, wherein the amounts of the anionic surfactant are less than 10% by weight, gave a larger elution ratio.
The pesticidal particle of the present invention can control the release of the pesticidal active ingredient therein and it is excellent at maintaining a uniform dispersing state after dispersing in water.
In particular, the pesticidal composition comprising said pesticidal particle, an anionic surfactant and a carrier, wherein the content of the anionic surfactant is 10% by weight or more, is effective for controlling the release of the pesticidal active ingredient.

**Claims**

1. A particle which is obtainable by spray-drying of a dispersion wherein a water-insoluble pesticidal active ingredient and oxidized polyethylene are dispersed in water.

2. The particle according to claim 1, wherein the oxidized polyethylene has 80-150°C of melting point.

3. The particle according to claim 1 or 2, wherein the water-insoluble pesticidal active ingredient has 80°C or more of melting point.

4. The particle according to claim 1 or 2, wherein the water-insoluble pesticidal active ingredient is flumioxazin.

5. A pesticidal composition which comprises the particle according to claim 1, an anionic surfactant and a carrier.

6. The pesticidal composition according to claim 5, wherein the content of the anionic surfactant is 10% by weight or more.

7. The pesticidal composition according to claim 5, wherein the content of the anionic surfactant is 10-25% by weight.

8. The pesticidal composition according to claim 5, wherein the contents of the particle, anionic surfactant and carrier are 0.1-40%, 10-25% and 5-89.9% by weight, respectively.

9. The pesticidal composition according to any of claims 5-8, wherein the water-insoluble pesticidal active ingredient in the particle is flumioxazin.

10. A method for producing a pesticidal particle which comprises a) a step for preparing a dispersion wherein a water-insoluble pesticidal active ingredient and oxidized polyethylene are dispersed in water and b) a step for spray-drying the dispersion.

**Patentansprüche**

1. Teilchen, das durch Sprühtrocknen einer Dispersion, in der ein wasserunlöslicher Pestizidwirkstoff und oxidiertes Polyethylen in Wasser dispergiert sind, erhältlich ist.

2. Teilchen nach Anspruch 1, wobei das oxidierte Polyethylen einen Schmelzpunkt von 80 - 150 °C aufweist.

3. Teilchen nach Anspruch 1 oder 2, wobei der wasserunlösliche Pestizidwirkstoff einen Schmelzpunkt von 80 °C oder mehr aufweist.

4. Teilchen nach Anspruch 1 oder 2, wobei der wasserunlösliche Pestizidwirkstoff Flumioxazin ist.

5. Pestizidzusammensetzung, die das Teilchen nach Anspruch 1, ein anionisches grenzflächenaktives Mittel und einen Träger umfasst.

6. Pestizidzusammensetzung nach Anspruch 5, wobei der Gehalt an dem anionischen grenzflächenaktiven Mittel 10 Gew.-% oder mehr beträgt.

7. Pestizidzusammensetzung nach Anspruch 5, wobei der Gehalt an dem anionischen grenzflächenaktiven Mittel 10 - 25 Gew.-% beträgt.

8. Pestizidzusammensetzung nach Anspruch 5, wobei die Gehalte an Teilchen, anionischem grenzflächenaktivem Mittel und Träger 0,1 - 40 Gew.-%, 10 - 25 Gew.-% bzw. 5 - 89,9 Gew.-% betragen.

9. Pestizidzusammensetzung nach einem der Ansprüche 5 bis 8, wobei der wasserunlösliche Pestizidwirkstoff in dem Teilchen Flumioxazin ist.

10. Verfahren zur Herstellung von Pestizidteilchen, das

a) eine Stufe zur Herstellung einer Dispersion, in der ein wasserunlöslicher Pestizidwirkstoff und oxidiertes Polyethylen in Wasser dispergiert sind, und
b) eine Stufe zur Sprühtrocknung der Dispersion umfasst.

**Revendications**

1. Particule qui peut être obtenue par séchage par atomisation d'une dispersion dans laquelle un ingrédient actif pesticide insoluble dans l'eau et du polyéthylène oxydé sont dispersés dans de l'eau.

2. Particule selon la revendication 1, dans laquelle le polyéthylène oxydé a un point de fusion compris entre 80 et 150 °C.

3. Particule selon la revendication 1 ou 2, dans laquelle l'ingrédient actif pesticide insoluble dans l'eau a un point de fusion compris entre 80 °C ou plus.

4. Particule selon la revendication 1 ou 2, dans laquelle l'ingrédient actif pesticide insoluble dans l'eau est la flumioxazine.

5. Composition pesticide qui comprend la particule selon la revendication 1, un tensioactif anionique et un support.

6. Composition pesticide selon la revendication 5, dans laquelle la teneur du tensioactif anionique est de 10 % en poids ou plus.

7. Composition pesticide selon la revendication 5, dans laquelle la teneur du tensioactif anionique est comprise de 10 à 25 % en poids.

8. Composition pesticide selon la revendication 5, dans laquelle les teneurs de la particule, du tensioactif anionique et du support sont comprises de 0,1 à 40 %, de 10 à 25 % et de 5 à 89,9 % en poids, respectivement.

9. Composition pesticide selon l'une quelconque des revendications 5 à 8, dans laquelle l'ingrédient actif pesticide insoluble dans l'eau dans la particule est la flumioxazine.

10. Procédé de production d'une particule pesticide qui comprend a) une étape de préparation d'une dispersion dans laquelle un ingrédient actif pesticide insoluble dans l'eau et du polyéthylène oxydé sont dispersés dans de l'eau et b) une étape de séchage de la dispersion par atomisation.